# EUROPEAN PATENT APPLICATION

(11) **EP 4 703 572 A1**
(43) Date of publication of application: **04.03.2026**
(21) Application number: 25199850.6
(22) Date of filing: 03.09.2025
(51) Int. Cl.: F01M 1/10, F16N 39/00, F02B 43/10

(54) **LUBRICATING OIL PURIFICATION SYSTEM AND LUBRICATING OIL PURIFICATION METHOD**

(30) Priority: 03.09.2024 JP 2024151672
(71) Applicant: Mitsubishi Kakoki Kaisha, Ltd, Kawasaki-shi, Kanagawa 210-8560 (JP)
(72) Inventor: ARAI, Tsuyoshi, Kawasaki-shi, Kanagawa, 210-8560 (JP); OTANI, Yoichiro, Kawasaki-shi, Kanagawa, 210-8560 (JP)
(74) Representative: Daub, Thomas

(57) **Abstract**

A lubricating oil purification system configured to purify a stock solution mixed with ammonia into lubricating oil, the lubricating oil purification system includes: an engine; a lubricating oil purifier configured to separate the stock solution containing the lubricating oil used in the engine into a light liquid, which is the purified lubricating oil, and a heavy liquid containing the ammonia; a path configured to supply the stock solution to the lubricating oil purifier; and an addition unit configured to add water to the stock solution in the path.

## Description

### BACKGROUND

### 1. Field of the Invention

The present disclosure relates to a lubricating oil purification system and a lubricating oil purification method for purifying lubricating oil containing ammonia.

### 2. Description of the Related Art

As a countermeasure against global warming, an ammonia fuel, which does not discharge carbon dioxide as a greenhouse gas during combustion, has attracted attention as a promising energy for implementing a carbon-neutral society.

In recent years, the practical use of an ammonia gas turbine engine and an ammonia-compatible engine, which can be operated using liquid ammonia as a ship fuel, has been advanced. In addition, in the case in which the liquid ammonia is used as the fuel, the development for operation of an ammonia fuel ship as a so-called zero-emission ship has also been advanced (see, for example, JP6934555B and JP6940727B).

When the liquid ammonia is used in an engine such as a ship, there is a problem that unburned ammonia gas in the engine is mixed into lubricating oil or dissolved in moisture in the lubricating oil.

When the dissolution of the unburned ammonia gas in the moisture in the lubricating oil is described in detail, the moisture is mixed into the lubricating oil due to condensation during engine operation or after the engine is stopped. When the engine is operated without removing the mixed moisture, an ammonia concentration in the engine increases, and the ammonia is dissolved in the moisture in the lubricating oil.

The ammonia is corrosive, and thus there is a problem that a material exposed to ammonia water and ammonia atmosphere is corroded.

**In** a lubricating oil purifier that separates a stock solution containing used lubricating oil into a heavy liquid and a light liquid (lubricating oil), when the stock solution is mixed with ammonia, a specific gravity of the heavy liquid decreases, resulting in a decrease in a removal rate of the heavy liquid, and there is a risk of problems such as the light liquid (lubricating oil) flowing out of a heavy liquid side, or the heavy liquid being mixed into the light liquid.

Therefore, there is a strong demand for a technique that can effectively separate a stock solution containing ammonia in lubricating oil into the lubricating oil and the ammonia, thereby obtaining purified lubricating oil.

### SUMMARY

An object of the present disclosure is to solve the above problems and to provide a lubricating oil purification system and a lubricating oil purification method capable of obtaining purified lubricating oil by removing ammonia from a stock solution containing ammonia and lubricating oil.

According to an aspect of the present disclosure, there is provided a lubricating oil purification system configured to purify a stock solution mixed with ammonia into lubricating oil, the lubricating oil purification system including: an engine; a lubricating oil purifier configured to separate the stock solution containing the lubricating oil used in the engine into a light liquid, which is the purified lubricating oil, and a heavy liquid containing the ammonia; a path configured to supply the stock solution to the lubricating oil purifier; and an addition unit configured to add water to the stock solution in the path.

According to another aspect of the present disclosure, there is provided a lubricating oil purification method configured to purify a stock solution mixed with ammonia into lubricating oil, the lubricating oil purification method including: a water addition step of adding water to the stock solution in a path for supplying the stock solution containing the lubricating oil used in an engine to a lubricating oil purifier; and a centrifugation step of separating the stock solution containing the lubricating oil into a light liquid, which is the lubricating oil purified by the lubricating oil purifier, and a heavy liquid containing the ammonia.

The lubricating oil purification system and the lubricating oil purification method of the present disclosure can separate the stock solution containing the ammonia and the lubricating oil into the lubricating oil and the ammonia.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
Fig. 1 is a block diagram illustrating a lubricating oil purification system and a lubricating oil purification method according to embodiments of the present disclosure;
Fig. 2 is a central vertical cross-sectional view illustrating a lubricating oil purifier;
Fig. 3 is a central vertical cross-sectional view of a rotating body of the lubricating oil purifier;
Fig. 4 is a block diagram illustrating a first modification of the lubricating oil purification system and the lubricating oil purification method according to the embodiments of the present disclosure; and
Fig. 5 is a block diagram illustrating a second modification of the lubricating oil purification system and the lubricating oil purification method according to the embodiments of the present disclosure.

### DETAILED DESCRIPTION OF THE INVENTION

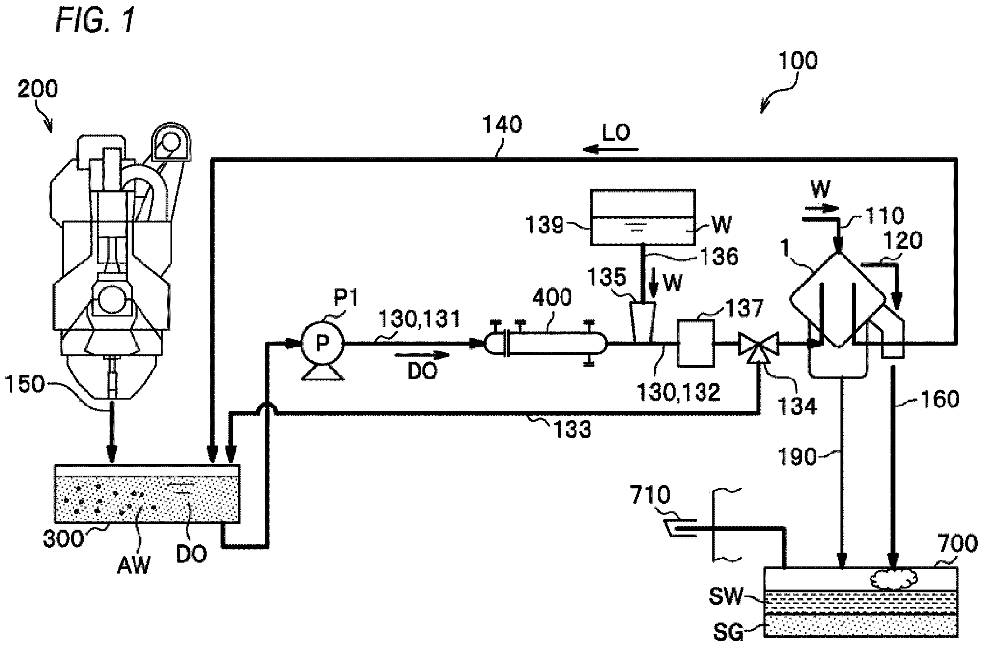

A lubricating oil purification system 100 and a lubricating oil purification method according to embodiments of the present disclosure will be described in detail with reference to Figs. 1 to 4.

### <<Lubricating Oil Purification System>>

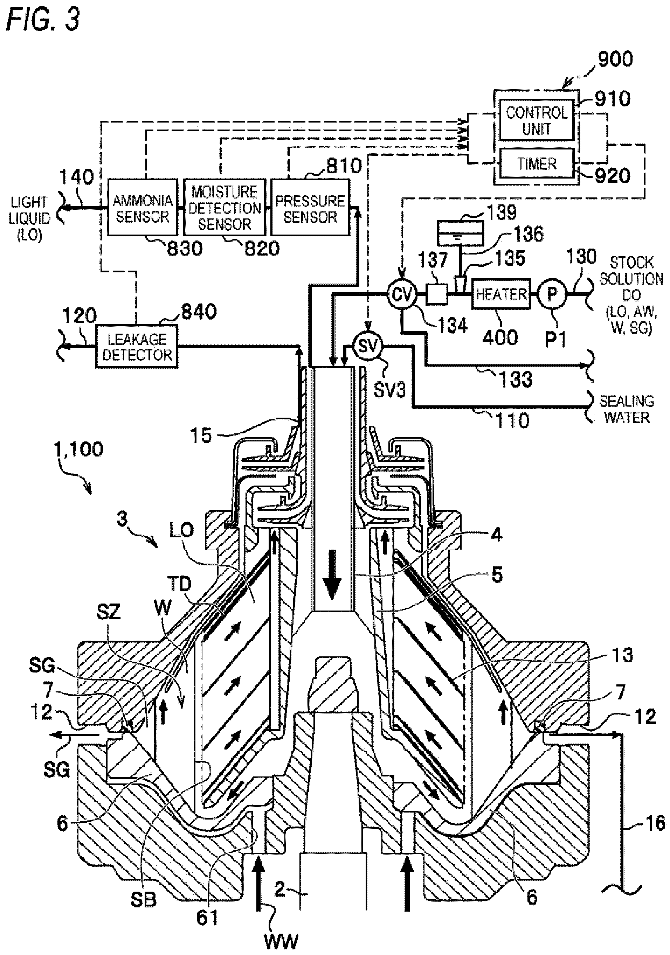

The lubricating oil purification system 100 illustrated in Fig. 1 is a purifier for purifying and reusing a used liquid (stock solution DO) such as lubricating oil LO (see Fig. 3), fuel oil, and built-in water used in an engine 200 or the like installed in a limited installation space (for example, an island power plant or an existing power plant) on a ship or land.

Hereinafter, a case in which the lubricating oil LO used in the engine 200 for combusting liquid ammonia as a fuel is treated as the used liquid (stock solution DO) will be described as an example of the lubricating oil purification system 100 according to the present disclosure.

In the engine 200 using the liquid ammonia as a fuel, sludge SG, ammonia, ammonia water AW, and the like may be mixed into the lubricating oil LO in the engine 200.

The lubricating oil purification system 100 includes a lubricating oil purifier 1 as illustrated in Figs. 1 and 3. The lubricating oil purifier 1 separates the stock solution DO that contains the lubricating oil LO mixed with the ammonia or the ammonia water AW into a light liquid, which is the purified lubricating oil LO, a heavy liquid, which is the ammonia water AW containing the ammonia, and the sludge SG (solid content). The lubricating oil purifier 1 is, for example, a three-phase separation type separation plate type centrifuge.

More specifically, as illustrated in Fig. 1 or 3, the lubricating oil purification system 100 mainly includes a lubricating oil tank 300, a lubricating oil supply pump P1, a heater 400, the lubricating oil purifier 1, a sludge tank 700, a water supply line 110 (feed water unit), a heavy liquid discharge line 120 (water drainage unit), a separator inlet line 130, an addition unit 135, a mixing unit 137, a sludge discharge line 160, a working water discharge line 190, and a control device 900. The lubricating oil purification system 100 is disposed in the ship.

In the lubricating oil purification system 100, a path that supplies the stock solution DO discharged from the engine 200 to the lubricating oil purifier 1 is formed by the lubricating oil discharge line 150, the lubricating oil tank 300, and the separator inlet line 130.

Here, the "path" may be any path that supplies the stock solution DO discharged from the engine 200 to the lubricating oil purifier 1. The flow path includes, for example, the separator inlet line 130, a stock solution return line 133, a light liquid discharge line 140, the lubricating oil discharge line 150, and the lubricating oil tank 300.

The light liquid discharge line 140 may include a pressure sensor 810, a moisture detection sensor 820, and an ammonia sensor 830.

### <<Engine>>

The engine 200 illustrated in Fig. 1 is a ship diesel engine disposed in the ship, and may be a turbine engine in which liquid ammonia having a discharge amount of carbon dioxide as a greenhouse gas of zero is used as a fuel. The engine 200 includes a mechanism that connects a crankshaft and a piston with only a connecting rod. **In** the engine 200, a lateral pressure, which is a lateral force, is generated on the piston, causing uneven wear in a cylinder. Therefore, the lubricating oil LO for improving the movement of the piston is used in the engine 200. The engine 200 may co-combust the liquid ammonia and a fossil fuel such as natural gas.

### <<Lubricating Oil Discharge Line>>

A lubricating oil discharge line 150 illustrated in Fig. 1 is a piping path for transferring the lubricating oil LO (stock solution DO) used in the engine 200 to the lubricating oil tank 300. The lubricating oil discharge line 150 is connected to the engine 200 at one end and to the lubricating oil tank 300 at the other end.

### <<Lubricating Oil Tank and Lubricating Oil>>

As illustrated in Fig. 1, the lubricating oil tank 300 is a tank for storing the stock solution DO containing the lubricating oil LO used in the engine 200. The stock solution DO to be supplied from the engine 200 to the lubricating oil tank 300 contains ammonia derived from an ammonia fuel. Therefore, the lubricating oil tank 300 is a tank with a lid (sealed tank) that prevents ammonia vaporized from the stock solution DO from leaking outside the lubricating oil tank 300.

The stock solution DO also contains the ammonia water AW mixed in the engine 200. A specific gravity of the stock solution DO is 0.90 to 0.96.

### <<Ammonia Water and Water>>

The ammonia water AW is an alkaline aqueous solution in which ammonia (NH₃) is dissolved in water W supplied from a water storage tank 139 (to be described later) and moisture mixed into the lubricating oil due to condensation during engine operation or after the engine is stopped. The ammonia water AW has a unique stimulus odor. The ammonia water AW may corrode a fluororubber O-ring or a heavy liquid and light liquid impeller made of copper alloy to be used in the lubricating oil purifier 1. Therefore, the other parts are preferably made of a corrosion-resistant material.

A specific gravity of the ammonia water AW is lighter than a specific gravity (1.0) of the water W. The specific gravity of the ammonia water AW is, for example, 0.9 at an ammonia concentration of about 28% and 0.88 at a concentration of about 35%. The specific gravity of the ammonia water AW changes depending on the ammonia concentration, and thus a position of a separation boundary surface SB in a separation chamber SZ of the lubricating oil purifier 1 moves in a radial direction as illustrated in Fig. 3.

### <<Separator Inlet Line>>

The separator inlet line 130 illustrated in Fig. 1 is a piping path for supplying the stock solution DO (lubricating oil LO mixed with the sludge SG, the ammonia water AW, and the ammonia) stored in the lubricating oil tank 300 to the lubricating oil purifier 1. The separator inlet line 130 includes a heater upstream side line 131 from the lubricating oil tank 300 to the heater 400, and a heater downstream side line 132 from the heater 400 to the lubricating oil purifier 1. The heater upstream side line 131 is provided with the lubricating oil supply pump P1. The heater downstream side line 132 is provided with the addition unit 135, the mixing unit 137, and a three-way valve 134.

### <<Lubricating Oil Supply Pump>>

The lubricating oil supply pump P1 is a pump for feeding the stock solution DO in the lubricating oil tank 300 to the lubricating oil purifier 1 via the separator inlet line 130. The lubricating oil supply pump P1 is disposed in the heater upstream side line 131. In the present embodiment, the lubricating oil supply pump P1 is disposed between the lubricating oil tank 300 and the heater 400. The stock solution DO in the lubricating oil tank 300 is supplied to the lubricating oil purifier 1 via the heater 400, the mixing unit 137, and the three-way valve 134. The ammonia water AW or ammonia is mixed in the stock solution DO in the heater upstream side line 131, and a part of the ammonia may be gasified in the stock solution DO in the heater downstream side line 132.

### <<Heater>>

The heater 400 is an oil heater that heats the lubricating oil LO (stock solution DO) to be fed to the lubricating oil purifier 1. The heater 400 is provided between the lubricating oil supply pump P1 of the separator inlet line 130 and the addition unit 135. The heater 400 heats the lubricating oil LO to, for example, about 90°C. The heater 400 can increase a separation efficiency of one or both of the solid content and the moisture in the lubricating oil purifier 1 by heating the lubricating oil LO and decreasing a viscosity.

### <<Stock Solution Return Line and Three-way Valve>>

The stock solution return line 133 is a piping path for returning the stock solution DO in the separator inlet line 130 to the lubricating oil tank 300. The stock solution return line 133 can return a flow of the stock solution DO to the lubricating oil tank 300 by switching the three-way valve 134 when it is necessary for operation of the lubricating oil purifier 1 at the time of sludge discharge, at the time of generation of an alarm, and at the time of introduction of replacement water and sealing water.

### <<Water Storage Tank and Feed Water Line>>

The water storage tank 139 is a tank for storing the water W to be supplied to the addition unit 135. The water storage tank 139 is connected to the addition unit 135 via a feed water line 136.

The addition unit 135 may be connected to the water supply line 110 instead of the water storage tank 139 and the feed water line 136, and the water W may be supplied from the water supply line 110.

### <<Addition Unit>>

The addition unit 135 is a device for adding the water W to the stock solution DO in the separator inlet line 130. The addition unit 135 includes, for example, a nozzle connected to the separator inlet line 130. The addition unit 135 is disposed downstream of the heater 400 in the separator inlet line 130. The stock solution DO in the heater downstream side line 132 downstream of the addition unit 135 is mixed with the ammonia water AW, the gasified ammonia, the water W added from the addition unit 135, and the like. In the separator inlet line 130, the mixing unit 137 for mixing the water W and the stock solution DO is provided downstream of the addition unit 135 or in the addition unit 135.

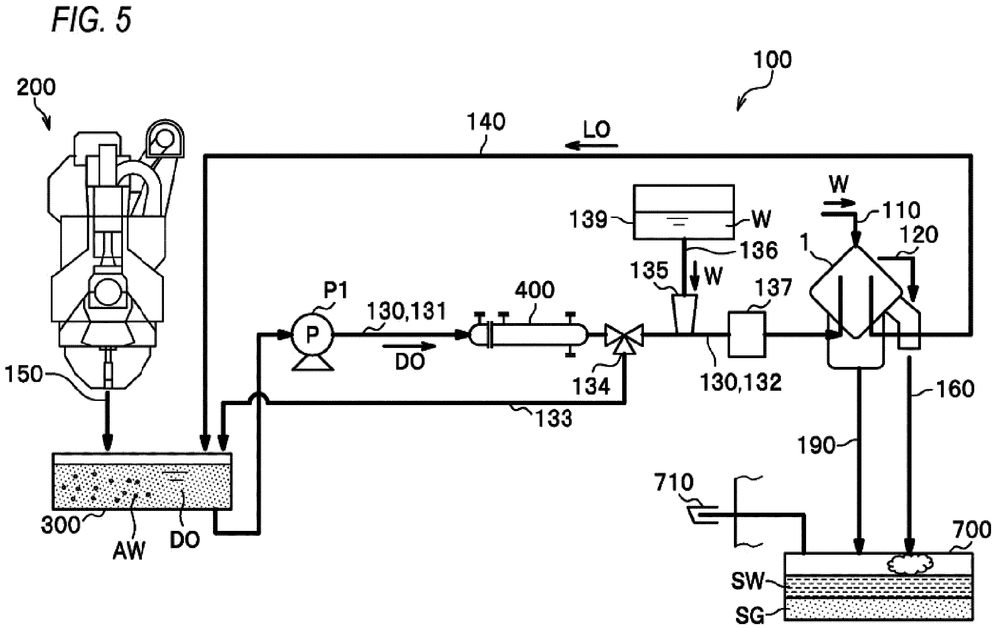

The addition unit 135 and the mixing unit 137 may be disposed, for example, between the heater 400 in the separator inlet line 130 and the three-way valve 134 as illustrated in Fig. 1, or may be disposed, for example, between the three-way valve 134 in the separator inlet line 130 and the lubricating oil purifier 1 as illustrated in Fig. 5.

**In** addition, the addition unit 135 and the mixing unit 137 may be disposed both upstream and downstream of the heater 400 in the separator inlet line 130.

### <<Mixing Unit>>

The mixing unit 137 is a mixer for mixing the stock solution DO in the separator inlet line 130 and the water W added by the addition unit 135. The mixing unit 137 includes a static mixer provided in the separator inlet line 130. By disturbing a flow of a liquid in a piping, the static mixer brings the gasified ammonia contained in the stock solution DO into contact with the water W added by the addition unit 135 to promote the generation of the ammonia water AW, and the static mixer includes a piping equipped with stirring elements or impellers that divide, invert, and rotate the fluid.

### <<Light Liquid Discharge Line>>

The light liquid discharge line 140 is a flow path for returning the lubricating oil LO (light liquid) purified by the lubricating oil purifier 1 to the lubricating oil tank 300. The light liquid discharge line 140 is a piping path from a discharge port of the lubricating oil purifier 1 to a lubricating oil supply port of the lubricating oil tank 300.

### <<Lubricating Oil Purifier>>

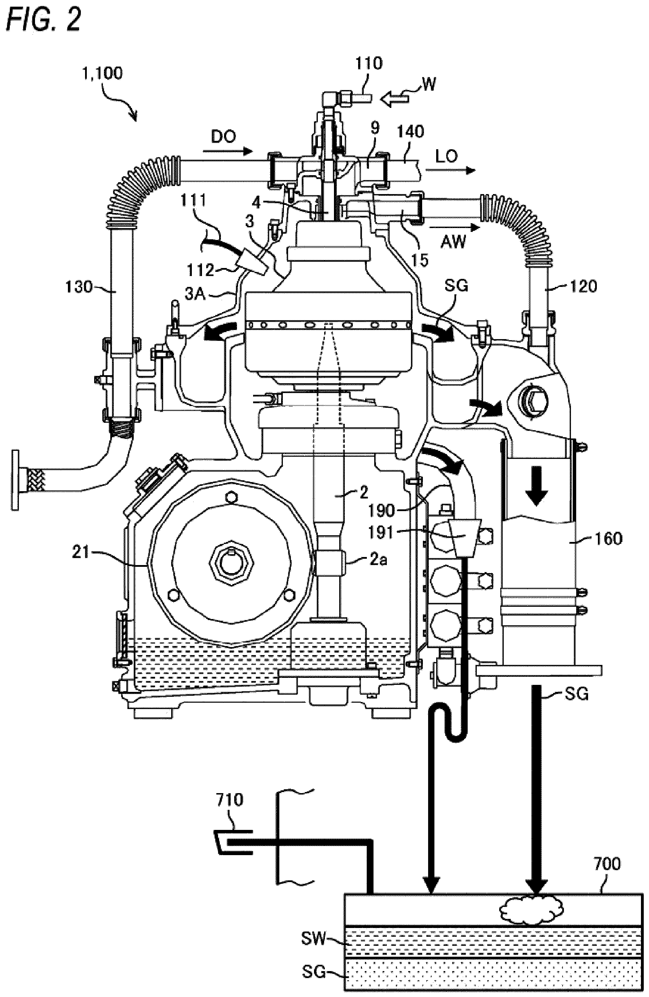

The lubricating oil purifier 1 is a device for separating and removing from the lubricating oil LO the sludge SG (solid content) or the ammonia water AW contained in the stock solution DO supplied from the lubricating oil tank 300. The lubricating oil purifier 1 may be, for example, a separation plate type centrifuge that separates the stock solution DO into three phases of liquid (light liquid)-liquid (heavy liquid)-solid content by a centrifugal force of a rotating body 3 (see Fig. 2) that rotates at a high speed. Inside the ship, the lubricating oil purifier 1 is connected to the separator inlet line 130 and the light liquid discharge line 140.

Next, the lubricating oil purifier 1 implemented by the separation plate type centrifuge will be described in more detail with reference to Figs. 2 and 3.

As illustrated in Fig. 3, the lubricating oil purifier 1 is a centrifuge (centrifugal settler) in which a large number of separation plates 13 implemented by truncated conical thin plates are stacked in the rotating body 3 at intervals in an axial direction of a guide cylinder 5. The lubricating oil purifier 1 has a mechanism for discharging the sludge SG deposited on an inner wall of the rotating body 3 to the outside by opening and closing a valve cylinder 6. The lubricating oil purifier 1 includes a rotating shaft 2, the rotating body 3, the guide cylinder 5, the separation chamber SZ, the valve cylinder 6, a light liquid discharge portion 9 (see Fig. 2), and a heavy liquid discharge portion 15.

### <Rotating Shaft>

As illustrated in Fig. 2, the rotating shaft 2 includes a gear portion 2a that meshes with a speed increasing gear 21 that is rotationally driven by an electric motor (not illustrated), and is rotated by the electric motor (not illustrated) with the speed increasing gear 21 interposed therebetween.

### <Rotating Body>

As illustrated in Fig. 3, the rotating body 3 is a member that is attached to the rotating shaft 2 and rotates at a high speed around the rotating shaft 2. The rotating body 3 has an integral shape in which an upper half portion is a substantially truncated cone-shaped portion and a lower half portion is a large-diameter cylindrical portion whose diameter is larger than a large diameter of the truncated cone-shaped portion. The rotating body 3 is fixed to the rotating shaft 2.

### <Liquid Inlet Pipe>

As illustrated in Fig. 3, a liquid inlet pipe 4 is a pipe body for supplying the stock solution DO (lubricating oil LO used in the engine 200) and the water W to the inside of the rotating body 3. The liquid inlet pipe 4 is provided at an upper portion of a central portion of the rotating body 3. The water supply line 110 and the separator inlet line 130 (see Fig. 2) are connected upstream of the liquid inlet pipe 4. Further, the water W to be supplied into the separation chamber SZ of the lubricating oil purifier 1 is introduced into the rotating body 3 from the water supply line 110 via the liquid inlet pipe 4.

### <Guide Cylinder>

The guide cylinder 5 is a member for guiding the stock solution DO and the water W introduced into the rotating body 3 from the liquid inlet pipe 4 to the separation chamber SZ from a lowermost portion in the rotating body 3. The guide cylinder 5 is a cylindrical body having a flared shape, and is provided at the central portion in the rotating body 3.

### <Separation Chamber>

As illustrated in Fig. 3, the separation chamber SZ is a chamber for separating the stock solution DO into respective components by a centrifugal force according to a specific gravity difference. The separation chamber SZ is a circular space in a cross-sectional view. The large number of stacked separation plates 13 are disposed in the separation chamber SZ. The separation chamber SZ includes a separation region in which the stacked separation plates 13 are disposed and a sludge deposition region in an outermost diameter portion in the rotating body 3. In a process in which the stock solution DO introduced into the separation chamber SZ flows upward through a gap between the separation plates 13, the sludge SG having the highest specific gravity is deposited in the outer sludge deposition region, the heavy liquid (ammonia water AW or water W) having a lower specific gravity than the sludge SG moves to a region between the sludge deposition region and the separation region, and the light liquid (lubricating oil LO) having the lowest specific gravity moves toward the center of the rotating body 3. The light liquid (purified lubricating oil LO) is discharged to the outside from the light liquid discharge portion 9 (see Fig. 2) provided on an upper portion of the rotating body 3. The ammonia water (heavy liquid) AW separated in the separation chamber SZ is discharged to the outside through the heavy liquid discharge line 120 and the leakage detector 840 from the heavy liquid discharge portion 15 formed between a water receiving plate **TD** and an inner wall of the upper portion of the rotating body 3.

### <Valve Cylinder>

The valve cylinder 6 is a valve body that opens and closes a sludge discharge port 12 (portion that is in pressure contact with a valve packing 7). When a pilot valve V is opened to discharge water on a lower side of the valve cylinder 6, the valve cylinder 6 is lowered to open the sludge discharge port 12, and the sludge SG is discharged. A working water supply port 61 for supplying working water for opening and closing the valve cylinder is provided below the valve cylinder 6.

### <Light Liquid Discharge Portion>

As illustrated Fig. 2, the light liquid discharge portion 9 is a part for discharging the lubricating oil LO (light liquid) separated in the separation chamber SZ to the outside. The light liquid discharge line 140 is attached to the light liquid discharge portion 9.

### <Heavy Liquid Discharge Portion>

As illustrated Fig. 2, the heavy liquid discharge portion 15 is a part for discharging the ammonia water (heavy liquid) separated in the separation chamber SZ to the outside. The heavy liquid discharge line 120 is attached to the heavy liquid discharge portion 15.

### <Sludge Discharge Line>

As illustrated Fig. 3, the sludge discharge line 160 (sludge discharge unit) is a discharge path for discharging the sludge SG centrifuged by the lubricating oil purifier 1 to the outside of the lubricating oil purifier 1. The sludge discharge line 160 has an upstream side connected to the sludge discharge port 12 and a downstream side connected to the sludge tank 700 (see Fig. 1). The sludge SG in the lubricating oil purifier 1 is discharged to the sludge discharge line 160 and stored in the sludge tank 700, and then discarded.

### <Working Water Discharge Line>

As illustrated in Fig. 2, the working water discharge line 190 (water discharge line) is a discharge path for discharging wash water injected into a frame 3A of the lubricating oil purifier 1. The working water discharge line 190 has an upstream side connected to the lubricating oil purifier 1 and a downstream side connected to the sludge tank 700 (see Fig. 1). The working water discharge line may be connected to a tank other than the sludge tank 700 depending on a situation of arrangement.

### <Sludge Tank>

The sludge tank 700 is a tank for storing the sludge SG and the waste liquid SW discharged from the lubricating oil purifier 1. The sludge tank 700 is provided, in an upper portion thereof, a vent 710 for discharging ammonia gas or the like vaporized from the waste liquid SW to the outside of the sludge tank 700. When the waste liquid SW in the sludge tank 700 is 40°C or higher, a cooling device for cooling the waste liquid SW may be installed.

### <Water Supply Line>

As illustrated in Fig. 3, the water supply line 110 is a feed water unit for supplying the water W (sealing water and replacement water) into the separation chamber SZ (inside the rotating body 3). When the lubricating oil purifier 1 is in operation (processing of separating the ammonia water AW from the stock solution DO is being performed), the position of the separation boundary surface SB is preferably controlled by intermittently or continuously supplying the water W into the separation chamber SZ and adjusting the specific gravity of the ammonia water AW (heavy liquid). The water supply line 110 supplies wash water into the separation chamber SZ at the time of maintenance of the lubricating oil purifier 1. The water supply line 110 is provided with a valve SV3 (not illustrated) for adjusting the supply of water into the separation chamber SZ (inside the rotating body 3). Alternatively, the water supply line 110 adjusts the supply of water by controlling the valve SV3 using a control unit 910 and a timer 920 based on a measurement value of any one of the pressure sensor 810, the moisture detection sensor 820, the ammonia sensor 830, and the leakage detector 840 to be described later.

### <Nozzle Water Supply Line>

As illustrated in Fig. 2, a nozzle water supply line 111 is a feed water unit for feeding the water W to a nozzle 112.

### <Nozzle>

The nozzle 112 is attached to the nozzle water supply line 111 and ejects the water W in a shower-like manner into the frame 3A that surrounds the rotating body 3. Water droplets of the ammonia water AW discharged from the sludge discharge port 12 into the frame 3A together with the sludge are washed away by the water W ejected (sprayed) into the frame 3A, and the ammonia gasified in the frame 3A is dissolved in the water W ejected (sprayed) into the frame 3A. The nozzle 112 is inserted into an upper portion of the frame 3A (above the sludge discharge port 12).

### <Heavy Liquid Discharge Line>

As illustrated in Fig. 3, the heavy liquid discharge line 120 (water drainage unit) is a flow path through which the ammonia water AW (separation water) centrifuged by the lubricating oil purifier 1 is discharged, and is connected to the heavy liquid discharge portion 15 of the lubricating oil purifier 1. The ammonia water AW (heavy liquid) in the lubricating oil purifier 1 overflows from the heavy liquid discharge portion 15, and is discharged to the heavy liquid discharge line 120, stored in the sludge tank 700, and then discarded. The heavy liquid discharge line 120 may be provided with the leakage detector 840.

### <Pressure Sensor>

The pressure sensor 810 is a measurement instrument that measures a pressure of the light liquid to be discharged from the light liquid discharge portion 9 of the lubricating oil purifier 1. The pressure sensor 810 is electrically connected to the control unit 910.

### <Moisture Detection Sensor>

The moisture detection sensor 820 is a measurement instrument that measures an amount of moisture in the light liquid to be discharged from the light liquid discharge portion 9 of the lubricating oil purifier 1. The moisture detection sensor 820 is electrically connected to the control unit 910. The moisture detection sensor 820 may be omitted based on a situation of the lubricating oil LO.

### <Ammonia Sensor>

The ammonia sensor 830 is a measurement instrument that measures an ammonia concentration of the ammonia water AW to be discharged from the light liquid discharge portion 9 of the lubricating oil purifier 1. The ammonia sensor 830 is electrically connected to the control unit 910. The ammonia sensor 830 may be omitted based on the situation of the lubricating oil LO.

### <Leakage Detector>

The leakage detector 840 is a measurement instrument that mechanically measures the heavy liquid to be discharged from the heavy liquid discharge portion 15 of the lubricating oil purifier 1. The leakage detector 840 is electrically connected to the control unit 910. The leakage detector 840 may be omitted based on the situation of the lubricating oil LO.

### <Control Device>

The control device 900 illustrated in Fig. 3 has a function of intermittently or continuously supplying the water W to be supplied to the lubricating oil purifier 1 at a preset timing or at any timing to maintain the specific gravity of the ammonia water AW (heavy liquid) in the separation chamber SZ to a predetermined value or more. The control device 900 includes the control unit 910 and the timer 920. The timer 920, the pressure sensor 810, the moisture detection sensor 820, the ammonia sensor 830, and the leakage detector 840 are connected to the control unit 910.

### <Purified Lubricating Oil>

The purified lubricating oil is the lubricating oil LO purified by the lubricating oil purifier 1. The purified lubricating oil is stored again in the lubricating oil tank 300 from the lubricating oil purifier 1 via the light liquid discharge line 140, and then supplied to an engine or an accessory (for example, a generator and a boiler) of the ship.

### <<Operations>>

Next, operations of the lubricating oil purification system 100 and the lubricating oil purification method according to the embodiments of the present disclosure will be described with reference to Figs. 1 to 4.

For example, as illustrated in Fig. 1, the lubricating oil LO (stock solution DO) used in the engine 200 is stored in the lubricating oil tank 300. The stock solution DO stored in the lubricating oil tank 300 is introduced from the separator inlet line 130 into the lubricating oil purifier 1 via the heater 400, the addition unit 135, the mixing unit 137, and the three-way valve 134.

**In** the separator inlet line 130, a water addition step of adding the water W to the stock solution DO in the separator inlet line 130 is performed. Therefore, the ammonia contained in the stock solution DO in the separator inlet line 130 and the ammonia gasified from the stock solution DO are dissolved in the water W supplied by the addition unit 135 to become the ammonia water AW.

The ammonia concentration in the stock solution DO can be diluted by adding the water W to the separator inlet line 130, and thus the concentration of the ammonia water AW contained in the stock solution DO can be prevented from becoming too high.

In the separator inlet line 130, a heating step of heating the stock solution DO in the separator inlet line 130 by the heater 400 is performed. When the stock solution DO (lubricating oil LO) is heated, a viscosity of the stock solution DO decreases, and thus the separation efficiency between the solid content and the moisture in the lubricating oil purifier 1 can be increased. In addition, when the lubricating oil LO is heated, the ammonia trapped in the lubricating oil LO is gasified and becomes more likely to come into contact with the water W.

In the separator inlet line 130, a mixing step of mixing the water W added in the water addition step and the stock solution DO by the mixing unit 137 is performed. By the mixing unit 137, the ammonia in the stock solution DO and the ammonia gasified from the stock solution DO efficiently come into contact with the water W, thereby accelerating the production of ammonia water.

In the lubricating oil purifier 1, a centrifugation step of separating the stock solution DO containing the ammonia water AW and the lubricating oil LO into a light liquid, which is the lubricating oil LO, and a heavy liquid, which is the ammonia water AW, is performed. The lubricating oil purifier 1 separates the stock solution DO into the lubricating oil LO (light liquid) and the ammonia water AW (heavy liquid), thereby preventing the ammonia from remaining in the lubricating oil purification system 100.

As illustrated in Fig. 3, the stock solution DO introduced into the lubricating oil purifier 1 flows upward between the plurality of stacked separation plates 13. Normally, components having a large specific gravity (sludge SG, water W, and the like) move toward the outermost diameter portion in the rotating body 3 and are separated therefrom. A component having a low specific gravity (lubricating oil LO) moves toward the center of the rotating body 3 and is separated therefrom.

**In** general, when the stock solution DO mixed with the ammonia water AW is supplied into the rotating body 3, the stock solution DO is separated into the lubricating oil LO, the ammonia water AW, and the sludge SG.

The specific gravity of the ammonia water AW is smaller than that of the water W not containing ammonia, and as a result, a specific gravity difference between the light liquid (lubricating oil LO) and the heavy liquid (ammonia water AW) becomes small. Therefore, a separation efficiency between the light liquid (lubricating oil LO) and the heavy liquid (ammonia water AW) may decrease. In addition, the separation boundary surface SB between the ammonia water AW and the lubricating oil LO is pushed by the lubricating oil LO and moves outward. Therefore, if the ammonia concentration of the ammonia water AW becomes high (for example, if the ammonia concentration exceeds 6 wt%), the light liquid may leak (light liquid may flow out to the heavy liquid discharge line 120) when three-phase separation is performed (when purifier operation is performed).

In addition, when the concentration of the ammonia water AW is high, the specific gravity difference between the light liquid and the heavy liquid is small, and thus the water W accumulated in the rotating body 3 cannot be located in an ideal position on the separation boundary surface SB.

In the present embodiment, in a step of centrifuging the stock solution DO mixed with the ammonia water AW (centrifugation step), the specific gravity of the ammonia water AW in the separation chamber SZ can be recovered to the predetermined value or more by supplying water into the separation chamber SZ (water injection step). In this way, the specific gravity of the ammonia water AW can be maintained at a constant value or more by introducing the water W into the separation chamber SZ, and thus stable normal operation can be achieved by minimizing the loss of lubricating oil LO (light liquid flowing out to the heavy liquid discharge portion 15).

The water injection step may be performed intermittently or continuously using the timer 920 and the control device 900 illustrated in Fig. 3. The water supply step may be performed when the measurement value of at least one of the pressure sensor 810, the moisture detection sensor 820, the ammonia sensor 830, or the leakage detector 840 reaches a threshold value. In this way, the specific gravity of the ammonia water AW can be maintained at the predetermined value or more (that is, the specific gravity difference between the ammonia water AW and the lubricating oil LO in the separation chamber SZ can be maintained at the predetermined value or more).

In a discharge step, the ammonia water AW and the sludge SG may be discharged by the timer 920 and the control device 900 at regular intervals or when the measurement value of at least one of the pressure sensor 810, the moisture detection sensor 820, the ammonia sensor 830, or the leakage detector 840 reaches the threshold value. The discharge step and the water injection step are not performed simultaneously, but only one of those steps is performed.

As described above, according to the present embodiment, the ammonia mixed in the stock solution DO and the ammonia gasified from the stock solution DO are dissolved in the water W added to the separator inlet line 130 by the addition unit 135. Therefore, the ammonia mixed in the stock solution DO and the ammonia gasified from the stock solution DO can be converted into the ammonia water AW. Furthermore, the stock solution DO mixed with the ammonia water AW is separated into the ammonia water AW, the lubricating oil LO, and the sludge SG by the lubricating oil purifier 1, and thus the purified lubricating oil LO can be obtained.

The lubricating oil purification system 100 according to the present embodiment is the lubricating oil purification system 100 capable of purifying the lubricating oil (stock solution DO) mixed with ammonia, and includes the engine 200, the lubricating oil purifier 1 that separates the stock solution DO containing the lubricating oil LO mixed with the ammonia used in the engine 200 into a light liquid, which is the purified lubricating oil LO, and a heavy liquid containing the ammonia, the path (for example, the separator inlet line 130) for supplying the stock solution DO to the lubricating oil purifier 1, and the addition unit 135 that adds the water W to the stock solution DO in the separator inlet line 130.

The lubricating oil purification system 100 having such a configuration includes the addition unit 135, and thus the ammonia in the stock solution DO can be dissolved in the water W by adding the water W to the stock solution DO in the path (for example, the separator inlet line 130). By supplying the stock solution DO containing the ammonia water AW and the lubricating oil LO to the lubricating oil purifier 1, the lubricating oil LO and the ammonia water AW can be separated.

In addition, by adding the water W to the stock solution DO in the separator inlet line 130, the addition unit 135 can set the specific gravity difference between the light liquid (lubricating oil LO) and the heavy liquid (ammonia water AW) in the separation chamber SZ to a size suitable for sedimentation separation. Therefore, the lubricating oil purifier 1 can more reliably separate the stock solution DO containing the ammonia water AW and the lubricating oil LO into the lubricating oil LO and the ammonia water AW, thereby obtaining the purified lubricating oil LO.

In the lubricating oil purification system 100, as illustrated in Fig. 1, the path (for example, the separator inlet line 130) is provided with the heater 400 for heating the stock solution DO to be fed to the lubricating oil purifier 1, and the addition unit 135 is disposed downstream of the heater 400 of the separator inlet line 130.

According to such a configuration, the viscosity can be decreased by heating the stock solution DO (lubricating oil LO), and thus the separation efficiency between the solid content and the moisture in the lubricating oil purifier 1 can be increased. In addition, by heating the lubricating oil LO by the heater 400, the ammonia released from the lubricating oil LO becomes more likely to come into contact with the water W, and thus the ammonia in the stock solution DO can be dissolved in the water W.

As illustrated in Fig. 1, the lubricating oil purification system 100 is provided with the mixing unit 137 for mixing the water W and the stock solution DO.

According to such a configuration, the ammonia and the water W in the stock solution DO can be efficiently brought into contact with each other and mixed.

The mixing unit 137 illustrated in Fig. 1 is a static mixer provided on the path (for example, the separator inlet line 130).

When the mixing unit 137 is a static mixer, the ammonia and the water W of the lubricating oil LO can be efficiently mixed. In addition, the static mixer does not include a drive unit, and thus the cost of maintenance and the installation space can be reduced, and the energy saving can be achieved.

The lubricating oil purification method of the present embodiment is a lubricating oil purification method capable of purifying the lubricating oil (stock solution DO) mixed with ammonia, and includes the water addition step of adding the water W to the stock solution DO in the path (for example, the separator inlet line 130) for supplying the stock solution DO containing the lubricating oil LO used in the engine 200 to the lubricating oil purifier 1, and the centrifugation step of separating the stock solution DO containing the lubricating oil LO into the light liquid, which is the lubricating oil LO purified by the lubricating oil purifier 1, and the heavy liquid containing the ammonia.

Such a lubricating oil purification method includes the water addition step of adding the water W to the stock solution DO in the path (separator inlet line 130), and thus the ammonia in the separator inlet line 130 can be dissolved in the water W. **In** addition, the specific gravity of the ammonia water AW contained in the stock solution DO is increased by adding the water W to the stock solution DO, and thus the specific gravity difference between the light liquid (lubricating oil LO) and the heavy liquid (ammonia water AW) can be set to a size suitable for sedimentation separation. As a result, the stock solution DO containing the ammonia and the lubricating oil LO can be separated into the lubricating oil LO and the ammonia water AW to obtain the purified lubricating oil LO.

As illustrated in Fig. 1, the lubricating oil purification method further includes the mixing step of mixing the water W added in the water addition step and the stock solution DO.

According to such a configuration, the ammonia in the stock solution DO can be efficiently dissolved in the water W to obtain the ammonia water AW, and the lubricating oil LO and the ammonia water AW can be separated by supplying the stock solution DO containing the ammonia water AW and the lubricating oil LO to the lubricating oil purifier 1.

As illustrated in Fig. 1, the lubricating oil purification method further includes the heating step of heating the stock solution DO in the path (for example, the separator inlet line 130).

According to such a lubricating oil purification method, the viscosity can be decreased by heating the stock solution DO (lubricating oil LO), and thus the separation efficiency between the solid content and the moisture in the lubricating oil purifier 1 can be increased. In addition, the ammonia is released from the lubricating oil LO, and thus the ammonia becomes more likely to come into contact with the water W added in the water addition step.

### [First Modification]

The present disclosure is not limited to the above embodiments, various modifications and changes can be made within the scope of the technical idea of the present disclosure, and it goes without saying that the present disclosure also covers the modified and changed disclosure. The configurations already described are denoted by the same reference numerals, and the description thereof is omitted.

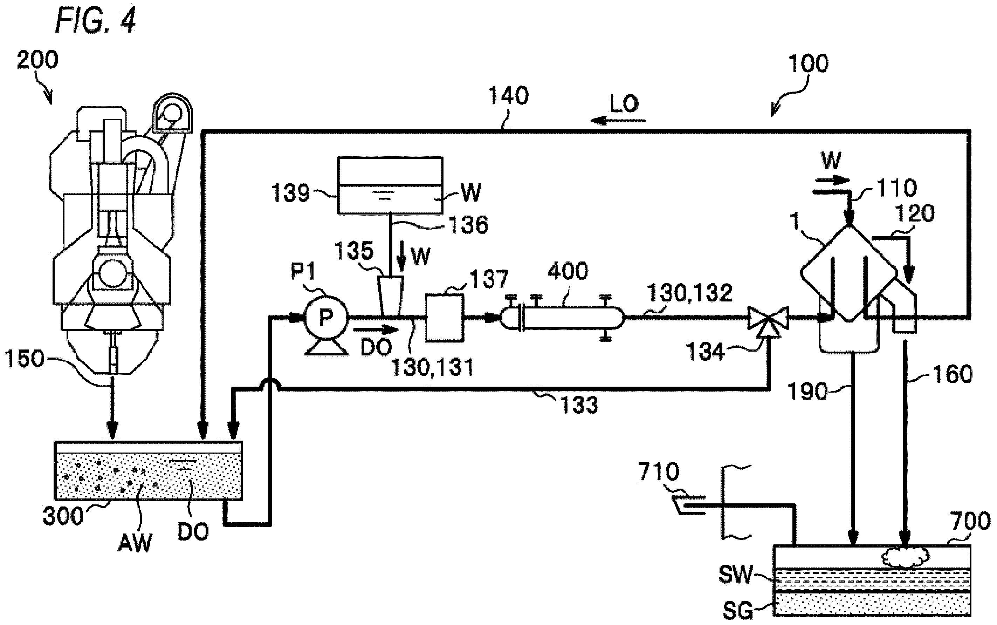

Fig. 4 is a block diagram illustrating a first modification of the lubricating oil purification system and the lubricating oil purification method according to the embodiments of the present disclosure.

The case has been described in which, in the lubricating oil purification system 100 of the embodiment illustrated in Fig. 1, the separator inlet line 130 is provided with the heater 400 for heating the stock solution DO to be fed to the lubricating oil purifier 1, and the addition unit 135 is provided downstream of the heater 400 in the path (for example, the separator inlet line 130). The present disclosure is not limited thereto, and as illustrated in Fig. 4, the addition unit 135 may be disposed upstream of the heater 400 of the separator inlet line 130.

In this case, the water W of the water storage tank 139 or the water W of the water supply line 110 (see Fig. 3) is supplied to the addition unit 135. In addition, the mixing unit 137 may be provided between the heater 400 and the addition unit 135 in the heater upstream side line 131. Although not illustrated, the mixing unit 137 may be provided downstream of the heater 400, or the mixing unit 137 may be omitted.

The addition unit 135 is disposed upstream of the heater 400 of the separator inlet line 130, and thus the ammonia in the stock solution DO can be easily dissolved in the water W. The ammonia water AW and the lubricating oil LO in the stock solution DO can be separated by the lubricating oil purifier 1, and the lubricating oil LO with fewer impurities can be produced.

### [Second Modification]

Fig. 5 is a block diagram illustrating a second modification of the lubricating oil purification system and the lubricating oil purification method according to the embodiments of the present disclosure.

As illustrated in Fig. 5, the three-way valve 134 provided at an upstream portion of the stock solution return line 133 illustrated in Fig. 1 may be provided between the heater 400 in the heater downstream side line 132 and the addition unit 135. In this way, the stock solution DO flowing through the separator inlet line 130 may be returned to the lubricating oil tank 300.

### [Other Modifications]

In the above embodiments, as illustrated in Fig. 1, the case in which only one lubricating oil purifier 1 is installed has been described, and a plurality of lubricating oil purifiers 1 may be arranged in parallel.

In the above embodiments, as illustrated in Figs. 1 and 4, the case in which the mixing unit 137 is disposed in the heater upstream side line 131 or the heater downstream side line 132 of the separator inlet line 130 has been described. However, the mixing unit 137 may be disposed in the separator inlet line 130 as needed, or may be omitted.

In the above embodiments, as illustrated in Fig. 2, the case in which the water supply line 110 (feed water unit) is connected to the liquid inlet pipe 4 has been illustrated. However, the water supply line 110 (feed water unit) may be connected to the lubricating oil tank 300 in the middle of the path for supplying the stock solution DO to the lubricating oil purifier 1, or may be connected to the lubricating oil discharge line 150.

In the above embodiments, the case in which the lubricating oil purifier 1 is the three-phase separation type separation plate type centrifuge has been exemplified, and a two-phase separation type separation plate type centrifuge may be used. In this case, the lubricating oil purifier 1 separates the stock solution DO, which is the lubricating oil LO mixed with the ammonia water AW, into the sludge SG containing the heavy liquid containing the ammonia water AW, and the light liquid, which is the purified lubricating oil LO.

When the two-phase separation type separation plate type centrifuge is used as the lubricating oil purifier 1, it is preferred to discharge the waste liquid SW when the measurement value of any one of the pressure sensor 810, the moisture detection sensor 820, the ammonia sensor 830, and the leakage detector 840 of the lubricating oil purifier 1 reaches the threshold value.

The moisture detection sensor 820, the ammonia sensor 830, and the leakage detector 840 may be omitted based on the situation of the lubricating oil LO.

## Claims

1. A lubricating oil purification system configured to purify a stock solution mixed with ammonia into lubricating oil, the lubricating oil purification system comprising:
an engine;
a lubricating oil purifier configured to separate the stock solution containing the lubricating oil used in the engine into a light liquid, which is the purified lubricating oil, and a heavy liquid containing the ammonia;
a path configured to supply the stock solution to the lubricating oil purifier; and
an addition unit configured to add water to the stock solution in the path.

2. The lubricating oil purification system according to claim 1, wherein
the path is provided with a heater for heating the stock solution to be fed to the lubricating oil purifier, and
the addition unit is disposed one or both downstream and upstream of the heater in the path.

3. The lubricating oil purification system according to claim 1 or 2, further comprising:
a mixing unit configured to mix the water and the stock solution.

4. The lubricating oil purification system according to claim 3, wherein
the mixing unit is a static mixer provided in the path.

5. A lubricating oil purification method configured to purify a stock solution mixed with ammonia into lubricating oil, the lubricating oil purification method comprising:
a water addition step of adding water to the stock solution in a path for supplying the stock solution containing the lubricating oil used in an engine to a lubricating oil purifier; and
a centrifugation step of separating the stock solution containing the lubricating oil into a light liquid, which is the lubricating oil purified by the lubricating oil purifier, and a heavy liquid containing the ammonia.

6. The lubricating oil purification method according to claim 5, further comprising:
a mixing step of mixing the water added in the water addition step with the stock solution.

7. The lubricating oil purification method according to claim 5 or 6, further comprising:
a heating step of heating the stock solution in the path.
